# EUROPÄISCHE PATENTSCHRIFT

(11) **EP 2 914 507 B1**
(45) Veröffentlichungstag und Bekanntmachung des Hinweises auf die Patenterteilung: **31.05.2017**
(21) Anmeldenummer: 13762408.6
(22) Anmeldetag: 11.09.2013
(51) Int. Cl.: B65D 51/00, A61J 1/14

(54) **DICHTUNGSANORDNUNG MIT ZUGEORDNETEM BEHÄLTER UND EINEM DICHTSTOFF**
SEAL ASSEMBLY COMPRISING AN ASSOCIATED CONTAINER AND A SEALING MATERIAL
AGENCEMENT D' ÉTANCHÉITÉ COMPRENANT UN RÉCIPIENT ASSOCIÉ ET UN MATÉRIAU D'ÉTANCHEMENT

(30) Priorität: 31.10.2012 DE 102012021525
(43) Veröffentlichungstag der Anmeldung: 09.09.2015
(73) Patentinhaber: Kocher-Plastik Maschinenbau GmbH, 74429 Sulzbach-Laufen (DE)
(72) Erfinder: SPALLEK, Michael, 55218 Ingelheim (DE); KÖPPEL, Karl, 73492 Rainau (DE)
(74) Vertreter: Bartels, Martin Erich Arthur
(86) Internationale Anmeldenummer: PCT/EP2013/002730
(87) Internationale Veröffentlichungsnummer: WO 2014/067597

(56) Entgegenhaltungen:
- EP-A1- 0 364 783
- EP-A1- 0 763 476
- EP-A2- 0 518 191
- DE-C1- 4 309 738
- DE-U1- 9 317 644
- GB-A- 1 266 302
- US-A- 3 325 860
- US-A- 3 805 986
- US-B2- 6 681 475

## Beschreibung

Die Erfindung betrifft eine Dichtungsanordnung mit den aus US 3,805,986 bekannten Merkmalen im Oberbegriff von Anspruch 1. Die Erfindung betrifft ferner ein Verfahren zum Herstellen einer solchen Dichtungsanordnung.

Behälter, die insbesondere ein steril abgefülltes Fluid enthalten, das mittels einer Kanüle, beispielsweise einer Spritzennadel oder eines Domes entnehmbar ist, finden insbesondere für medizinische Zwecke weit verbreitete Anwendung, beispielsweise in Form von Ampullen oder Infusionsflaschen. Für medizinische Anwendungen sind solche Behälter, die aus Kunststoff nach dem blow-fill-seal-Verfahren oder dem bekannten bottelpack^{®}-Verfahren hergestellt sind, deshalb besonders geeignet, weil das Füllgut ausschließlich zu einem Polymer Kontakt hat. Diese Behälter bieten daher eine hohe Sicherheit gegen mikrobielle Verschmutzungen, selbst bei längeren Lagerzeiten unter ungünstigen Umgebungsbedingungen. Derartige Kunststofferzeugnisse sind beispielsweise in den Dokumenten US 5,897,008 A oder EP 2 269 558 A1 offenbart. Wenn die Entnahme des Füllgutes mittels einer einstechbaren Kanüle oder eines Einstechdornes erfolgen soll, dann sind solche Behälter nur für einmalige Anwendung geeignet, da eine Wiederabdichtung nach erstem Öffnen nicht möglich ist, weil die für solche BFS-Behälter in Frage kommenden Polyolefine viel zu wenig elastisch sind, um die Einstichstelle sicher abzudichten. Um dem abzuhelfen, ist es bekannt, bei BFS-Behältern für medizinische Zwecke Einlegteile oder Stopfen aus Gummi zu benutzen. Dadurch wird einerseits der Herstellungsprozess durch das Einlegen erheblich kompliziert und verlangsamt. Ferner ist es erforderlich, Gummiteile vor dem Einlegen zu sterilisieren, um die Keimarmut des Füllgutes zu erhalten. Ein gravierender Nachteil besteht darin, dass das Füllgut auch während der Lagerzeit Kontakt mit dem Einlegeteil aufweist. Die Dokumente US 5 467 878 A, EP 0 721 897 A1, DE 2 844 206 C2 sowie DE 2 327 553 A1 offenbaren Behältnisse mit Kappen, die einen Gummieinsatz aufweisen und auf den Behälterkopf aufgedrückt und durch mechanische Fixierung mit dem Flaschenhals fest verbunden werden. Da der Gummieinsatz auf die flexible, dünne Behälterwand lediglich mechanisch aufgedrückt wird, verbleibt konstruktionsbedingt stets ein Spalt. In diesem Raum kann es leicht zu unerwünschten mikrobiologischen Verunreinigungen, Keimwachstum etc. kommen. Diese Kontaminationen können beim Durchstechen des Behälterkopfes leicht in den Behälter gelangen. Ferner kann durch Kapillarwirkung leicht Flüssigkeit angesaugt werden und so auch in den Zwischenraum zwischen Einsatz und Behälterkopf gelangen.

Die EP 0 364 783 A1 und das DE 93 17 644 U1 beschreiben jeweils eine Dichtungsanordnung, bestehend aus mindestens einem Behälter und/oder aus mindestens einem Behälterteil, wie einer auf den Behälter aufgesetzten Verschlusskappe, wobei das Innere des Behälters der Aufnahme eines Mediums, insbesondere in Form eines steril abgefüllten Fluids, dient, das mittels einer Entnahmeeinrichtung, wie einer Spritzennadel, aus dem Behälter entnehmbar ist, die hierfür mindestens einen Dichtstoff durchdringt, der mit seinen Teilen verbunden ist, wobei der jeweilige Dichtstoff auf der der Umgebung zugewandten Außenseite des Behälters und/oder seiner Behälterteile angeordnet ist. Eine sichere Vermeidung eines Hohlraumes oder Spalts zwischen dem Behälterkopf und dem Dichtstoff wird damit jedoch nicht erreicht, möglicherweise wird bei den durch einen dünneren Spalt erzeugten höheren Kapillarkräften Flüssigkeit angesaugt. Um die Keimfreiheit der Kontaktfläche von Behälterkopf und Dichtstoff zu gewährleisten, ist ferner ein Autoklavierungsprozess notwendig, dem auch der Behälterinhalt ausgesetzt ist. Solche Behältersysteme sind demnach nur für thermostabile Füllgüter geeignet, die die hohen Temperaturen (ca. 115 bis 132 °C) eines Autoklavierungsprozesses aushalten.

Die eingangs erwähnte US 3 805 986 A beschreibt eine Dichtungsanordnung, bestehend aus mindestens einem Behälter, wobei das Innere des Behälters der Aufnahme eines Mediums, insbesondere in Form eines steril abgefüllten Fluids, dient, das mittels einer Entnahmeeinrichtung, wie einer Spritzennadel, aus dem Behälter entnehmbar ist, die hierfür mindestens einen Dichtstoff durchdringt, der mit dem Behälter verbunden ist, wobei der jeweilige Dichtstoff auf der der Umgebung zugewandten Außenseite des Behälters angeordnet ist, wobei der Behälter aus Kunststoff in einem Blasformverfahren hergestellt, befüllt und steril verschlossen ist und dessen Behälterwand zur Entnahme von Füllgut mittels einer Kanüle oder eines Dorns durchstechbar ist, wobei der Dichtstoff zur Abdichtung einer bei einem Entnahmevorgang an der Behälterwand gebildeten Einstichstelle dient und durch in-situ-Anformen eines kappenartigen Körpers mit der Behälterwand fest verbunden ist. Weitere Dichtungsanordnungen gehen aus der EP 0 518 191 A2 und der US 3 325 860 hervor.

Ausgehend von diesem Stand der Technik stellt sich die Erfindung die Aufgabe, eine weiter verbessert Dichtungsanordnung zur Verfügung zu stellen.

Erfindungsgemäß ist diese Aufgabe durch eine Dichtungsanordnung gelöst, die die Merkmale des Patentanspruchs 1 in seiner Gesamtheit aufweist.

Durch die erfindungsgemäße Schweiß- oder Klebeverbindung mit dem Wandbereich an der Außenseite des Behälters ist die Gefahr vermieden, dass es zur Ausbildung eines Spaltes an der Kontaktfläche des Dichtstoffes kommen kann, wie dies bei einigen dem Stand der Technik entsprechenden Lösungen der Fall ist, bei denen sich der Dichtstoff durch eine Anpresskraft an die zugeordnete Kontaktfläche anschmiegt. Kontaminationen durch eine Keimwanderung durch Kapillarwirkung entlang eines Spaltes sind dadurch ausgeschlossen.

Vorzugsweise ist der jeweilige Dichtstoff ohne Schweißzusatz und bevorzugt klebstofffrei mit der Außenwand des Behälters und/oder seiner Behälterteile fest verschweißt.

Insbesondere ist die Anordnung mit Vorteil so getroffen, dass der jeweilige Dichtstoff abstandsfrei und mit seiner gesamten, dem Behälter oder Behälterteil zugewandten Kontaktfläche an dem zugeordneten Behälter-Wandbereich anliegt.

In besonders vorteilhafter Weise kommen als Dichtstoff verkleb- oder verschweißbare Elastomere oder Kunststoffe zum Einsatz, wobei vorzugsweise als Dichtstoff ein thermoplastisches Elastomer (TPE) eingesetzt ist.

Mit besonderem Vorteil kann eine derartige stoffschlüssige Verbindung bei einem Kunststoffbehälter und einem thermoplastischen Dichtstoff mittels eines thermischen Fügeprozesses erfolgen, bei dem die beiden Fügeelemente bei Temperaturen verschweißt werden, die dem Erweichungsverhalten angepasst sind, beispielsweise bei Temperaturen im Bereich von 200 °C, wobei vorzugsweise beide Teile angewärmt und kurz aneinander gepresst werden. Einschlägige Reibschweißverbindungen sind hier gleichfalls zum Verbinden von Dichtstoff mit dem Behälter oder seinen Teilen möglich. Von besonderem Vorteil ist hierbei, dass die Kontaktoberflächen von thermoplastischem Dichtstoff und Behälterkopf gleichzeitig oberflächlich sterilisiert werden.

Bei besonders vorteilhaften Ausführungsbeispielen weist der Behälter einen mit einem Behälterhauptteil über ein Halsteil verbundenen Behälterkopf mit dem für einen Entnahmevorgang durchstechbaren Wandabschnitt auf, auf dem der Dichtstoff vorgesehen ist.

Mit besonderem Vorteil kann die Anordnung so getroffen sein, dass an der Außenseite der Dichtungsanordnung eine am Körper des Dichtstoffes ablösbar anliegende Schutzfolie vorgesehen ist. Die vor dem ersten Einstechen zu entfernende Schutzfolie kann als Qualitätssiegel dienen.

Wenn der mit dem Körper des Dichtstoffes verbundene Wandabschnitt des Behälterkopfes eine vom Behälterinneren nach außen gerichtete Wölbung aufweist, besitzt die Außenseite des Körpers des Dichtstoffes vorzugsweise eine gleichartige Wölbung, so dass der Körper des Dichtstoffes die Außenkontur des Behälterkopfes fortsetzt. Auch kann die Außenseite des Körpers des Dichtstoffes zumindest eine Vertiefung aufweisen, beispielsweise in Form eines Ringraumes, der zu einem zentralen, unvertieften Bereich konzentrisch verläuft. Andere Konturierungen der Außenseite des Körpers des Schichtstoffes können vorgesehen sein, etwa eine muldenartige Vertiefung im eigentlichen Einstichbereich.

Bei besonders vorteilhaften Ausführungsbeispielen kann ein den Körper des Dichtstoffes seitlich einfassender Kunststoffring vorgesehen sein, der mit dem Behälterkopf und/oder dem Behälterhauptteil verbunden ist. Ein derartiger Kunststoffring kann an Behälterkopf und Körper des Dichtstoffes angegossen oder angespritzt sein. Ein derartiger Kunststoffring kann zusätzlich eine mechanisch feste Verbindung mit dem Behälterkopf haben, beispielsweise durch Verrastung, Verschweißung oder Vernietung.

Für eine Verrastung kann der Kunststoffring einen am Behälterkopf radial vorspringenden Randbereich hintergreifen.

Bei Ausführungsbeispielen, bei denen am Übergang zwischen Behälterhauptteil und Behälterkopf eine Schulter gebildet ist, kann der Kunststoffring den Behälterkopf kappenartig übergreifen und mit der Schulter verbunden sein.

Bei besonders vorteilhaften Ausführungsbeispielen ist die Anordnung so getroffen, dass der kappenartige Kunststoffring für den Körper des Dichtstoffes eine Einfassung in Form eines Zylinders bildet, der über den Körper hinaus axial vorspringt. Ein derartiger Zylinder kann mit seiner Zylinderwand einen Anschlussbereich für Entnahmeadapter bilden, wie sie beispielsweise aus EP 1 847 242 A1 bekannt sind und die einen Durchstech- oder Öffnungsmechanismus vorgeben.

In besonders vorteilhafter Weise kann das äußere Ende eines solchen Zylinders auch einen daran unter Bildung zumindest einer Sollbruchstelle angeformten Deckel aufweisen, an dem seinerseits eine Handhabe angeformt ist, die das Abreißen des Deckels an der jeweiligen Sollbruchstelle ermöglicht.

Der Dichtstoff für die Dichtungsanordnung besteht aus einem verkleb- oder verschweißbaren Elastomer oder einem Kunststoff, wobei insbesondere ein thermoplastisches Elastomer (TPE) vorgesehen ist und der Dichtstoff erfindungsgemäß in Form eines block- oder scheibenartigen Körpers vorliegt. Ein derartiger blockförmiger Dichtstoff wird vom Behälter gesondert hergestellt und für die Ingebrauchnahme des Behälters zur Verfügung gestellt, beispielsweise in der Form, dass ein entsprechender Block bei einer Verpackung mit fertiggestellten und gefüllten Behältern mitgeliefert ist, so dass ein Benutzer, beispielsweise durch eine Klebeverbindung mit einem Kunststoffmaterial, den Dichtstoffblock anbringen kann. Ist der Dichtstoffblock - in nicht erfindungsgemäßer Weise - über eine wieder lösbare Klebstoffverbindung mit dem jeweiligen Behälter verbindbar, wäre es auch möglich, eine Ampullenverpackung, beispielsweise mit sechs behälterförmigen Ampullen, in einem Kitt zusammenzufassen mit nur einem Dichtstoffblock, der dann auf die jeweilige Ampulle für einen Entnahmevorgang über die lösbare Klebstoffverbindung aufsetzbar ist und dann nach Gebrauch dieses Ampullenbehälters auf die nächstfolgende Ampulle nach Lösen vom vorangegangenen Behälter für einen erneuten Entnahmevorgang wiederum aufsetzbar ist.

Gemäß dem Patentanspruch 14 ist Gegenstand der Erfindung auch ein Verfahren zum Herstellen einer Dichtungsanordnung gemäß einem der Ansprüche 1 bis 13.

Wenn bei dem erfindungsgemäßen Verfahren ein Dichtstoff benutzt wird, der ein antimikrobielles Additiv enthält, dann lässt sich auch die äußere Oberfläche des Dichtstoffs über die Lagerdauer keimarm halten. Das hat den zusätzlichen Vorteil, dass die Einstichstelle des Dichtstoffes vor dem Durchstechen mit Dorn oder Kanüle nicht mehr desinfiziert werden muss. Nachstehend ist die Erfindung anhand von in der Zeichnung dargestellten Ausführungsbeispielen im Einzelnen erläutert. Es zeigen:
- Fig. 1: einen gegenüber einer praktischen Ausführungsform in größerem Maßstab gezeichneten Längsschnitt lediglich des dem Behälterkopf benachbarten Bereiches eines Ausführungsbeispiels des von der erfindungsgemäßen Dichtanordnung umfassten Behälters;
- Fig. 2: eine mit Blick von oben und in kleinerem Maßstab gezeichnete perspektivische Schrägansicht des in Fig. 1 gezeigten Bereiches;
- Fig. 3 und 4: den Fig. 1 und 2 entsprechende Darstellungen eines zweiten Ausführungsbeispiels;
- Fig. 5 und 6: den Fig. 1 und 2 entsprechende Darstellungen eines dritten Ausführungsbeispiels;
- Fig. 7: einen Längsschnitt lediglich des den Behälterkopf benachbarten Bereiches eines vierten Ausführungsbeispiels;
- Fig. 8: eine Draufsicht des vierten Ausführungsbeispiels;
- Fig. 9 und 10: den Fig. 1 und 2 entsprechende Darstellungen eines fünften Ausführungsbeispiels;
- Fig. 11 und 12: den Fig. 1 und 2 entsprechende Darstellungen eines sechsten Ausführungsbeispiels;
- Fig. 13 und 14: den Fig. 1 und 2 entsprechende Darstellungen eines siebten Ausführungsbeispiels;
- Fig. 15 und 16: den Fig. 1 und 2 entsprechende Darstellungen eines achten Ausführungsbeispiels;
- Fig. 17: eine im Bereich des Behälterkopfes teils aufgebrochen und geschnitten gezeichnete Seitenansicht eines neunten Ausführungsbeispiels;
- Fig. 18: eine der Fig. 17 ähnliche Darstellung eines zehnten Ausführungsbeispiels;
- Fig. 19: eine in größerem Maßstab gezeichneten Schnittdarstellung lediglich des Kopfbereiches des in Fig. 17 gezeigten neunten Ausführungsbeispiels; und
- Fig. 20: eine der Fig. 10 ähnliche Darstellung des Kopfbereiches des zehnten Ausführungsbeispiels von Fig. 18.

Nachstehend ist die Erfindung anhand von Ausführungsbeispielen von Behältern erläutert, wie sie als Infusionsflasche oder mit kleineren Abmessungen als Ampullen benutzt werden können, beispielsweise für eine Entnahme des Füllgutes durch unmittelbares Einstechen einer Injektionskanüle. Bei der Anwendung als Infusionsflasche kann ein Einstechdorn für die Entnahme von Füllgut vorgesehen sein. Die Behälter sind aus einem Kunststoffmaterial hergestellt, der für das bekannte blow-fill-seal-Verfahren, beispielsweise entsprechend dem bekannten bottelpack^{®}-System geeignet ist, also aus einem Polyolefin wie einem Polyethylen niedriger oder hoher Dichte oder Polypropylen.

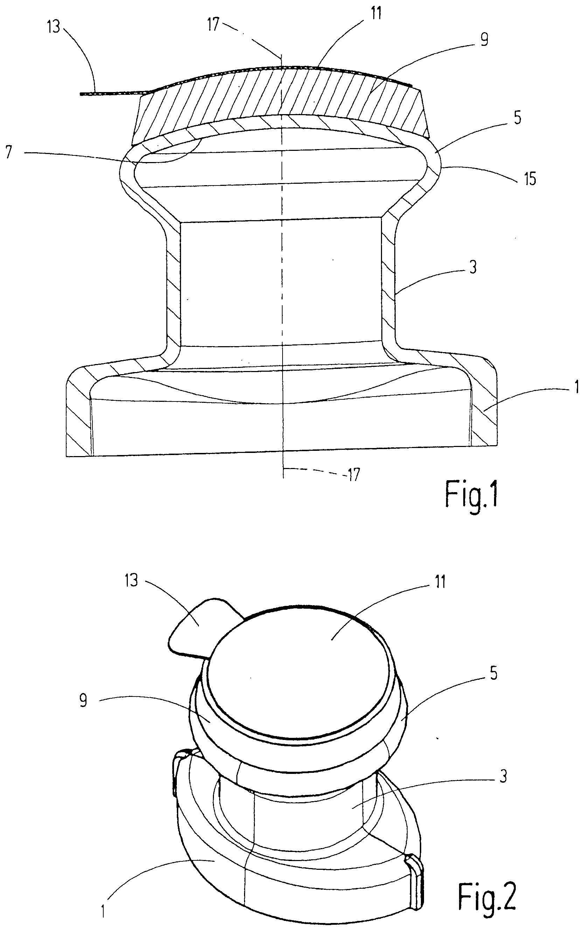

Die Fig. 1 und 2 zeigen ein erstes Ausführungsbeispiel, bei dem ein Behälterhauptteil, von dem lediglich der obere Endabschnitt dargestellt ist, mit 1 bezeichnet ist. An den im Umriss ovalen Behälterhauptteil 1 schließt sich ein verengtes, kreiszylindrisches Halsteil 3 an, das wiederum in einen den oberen Abschluss des Behälters bildenden Behälterkopf 5 übergeht. Dieser weist an der Oberseite einen leicht nach außen gewölbten Wandbereich 7 auf, der als Einstichbereich für das Durchstechen der Behälterwand für einen Entnahmevorgang vorgesehen ist. Auf dem Wandbereich 7 ist ein Dichtstoff aus einem thermoplastischen Elastomer (TPE) in Form eines scheibenartigen Körpers 9 unlösbar angebracht. Dieser Körper 9 besteht aus einem Polymer, das gegenüber dem Behältermaterial stärker elastisch ist, so dass es, in gleicher Weise wie dies bei einem Dichtelement aus Gummi der Fall ist, eine Einstichstelle wieder verschließt. Bei dem Werkstoff des Körpers 9 kann es sich um ein Polyethylen niedriger oder hoher Dichte handeln, beispielsweise Santoprene^{®} 181-55MED, Laprene^{®} SEBS, Thermolast^{®} TM 3RST, oder dergleichen. Zur Bildung der unlösbaren Verbindung des Körpers 9 mit dem Wandbereich 7 werden dieser und die Kontaktfläche des Körpers 9 auf eine Erweichungstemperatur, etwa im Bereich von 200 °C erhitzt und aneinander gepresst, so dass eine stoffschlüssige untrennbare Verbindung erfolgt. Auf der Oberseite des Körpers 9 ist eine Schutzfolie 11 aus Kunststoff ablösbar angebracht, die mittels einer überstehenden Handhabe 13 für die erste Benutzung des Behälters abziehbar ist. Die Oberseite der Schutzfolie 11 kann mit einer Markierung versehen sein, die beispielsweise ein Originalsiegel darstellt. Wie aus Fig. 1 ersichtlich, ist die von der Schutzfolie 11 bedeckte Oberseite des Körpers 9 in entsprechender Weise gewölbt, wie der Wandbereich 7 am Behälterkopf 5. Der scheibenartige Körper 9 bedeckt bei den Beispielen von Fig. 1 und 2 fast den gesamten Wandbereich 7 bis in die Nähe einer seitlichen Ausbauchung 15, durch die der Durchmesser des Behälterkopfes 5 gegenüber dem Durchmesser des Halsteiles 3 vergrößert ist.

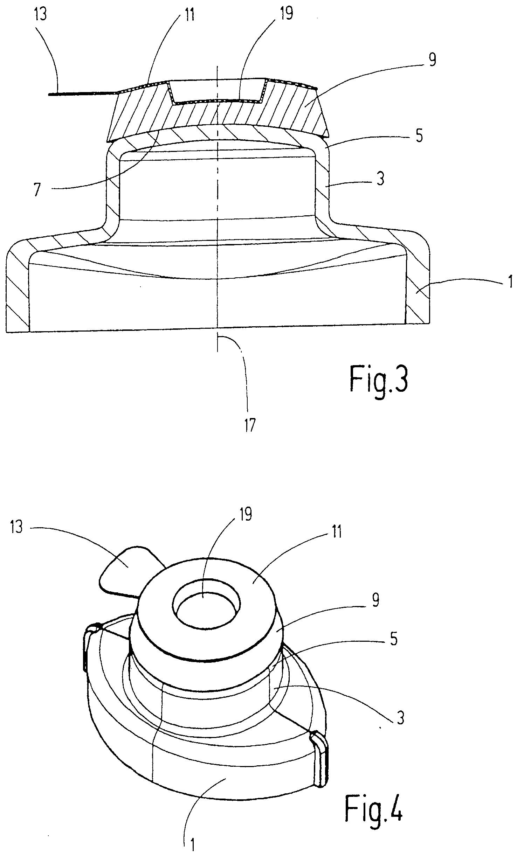

Das zweite Ausführungsbeispiel von Fig. 3 und 4 unterscheidet sich vom ersten Ausführungsbeispiel dadurch, dass das Halsteil 3 ohne Ausbauchung mit gleichem Durchmesser in den Behälterkopf 5 übergeht. Wiederum bildet dieser außenseitig einen gewölbten Wandbereich 7 für die unlösbare Verbindung mit dem Körper 9 des Dichtstoffes (TPE). Ein weiterer Unterschied gegenüber dem ersten Beispiel besteht darin, dass der Körper 9 des Dichtstoffes eine zur Hauptachse 17 konzentrische Vertiefung 19 aufweist, die in Form einer Mulde mit schräger, nach außen auseinanderstrebender Seitenwand besitzt. Die Vertiefung 19 bildet im Körper 9 einen Einstichbereich verringerter Wandstärke, während sich der übrige Teil des Körpers 9 unvertieft bis zum äußeren Rand des Wandbereiches 7 am Behälterkopf 5 erstreckt.

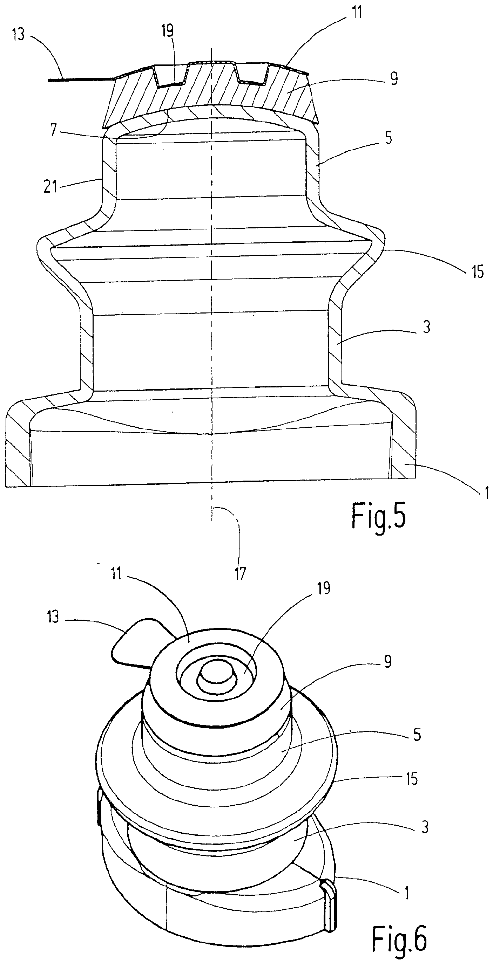

Das dritte Ausführungsbeispiel von Fig. 5 und 6 unterscheidet sich von den vorherigen Beispielen dadurch, dass der Behälterkopf 5, ausgehend von der sich an das Halsteil 3 anschließenden Ausbauchung 15, durch ein Zylinderteil 21 nach oben hin zum Wandabschnitt 7 verlängert ist. In Anordnung und äußerem Umriss entspricht der Körper 9 des Dichtstoffes dem Beispiel von Fig. 3 und 4, abgesehen davon, dass die Vertiefung 19 in Form eines zur Achse 17 konzentrischen Ringraumes ausgebildet ist.

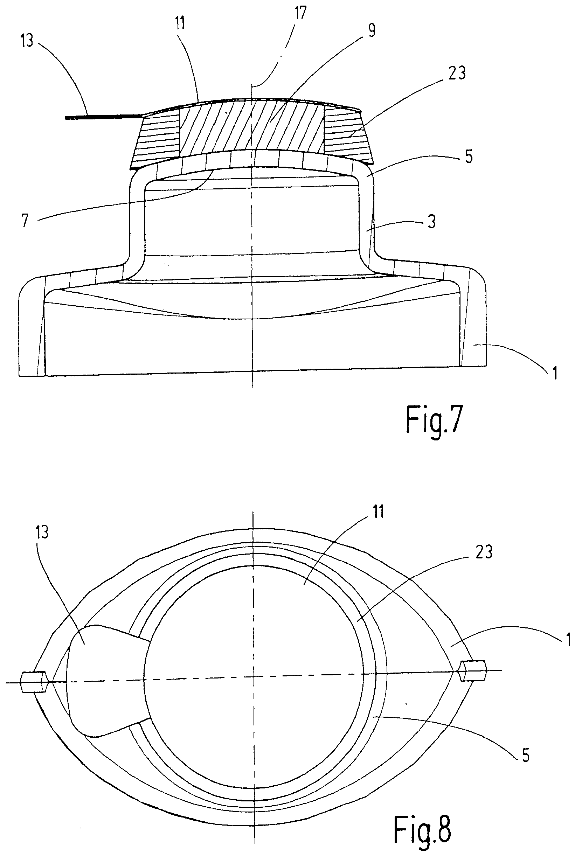

Das vierte Ausführungsbeispiel gemäß Fig. 7 und 8 entspricht hinsichtlich der Gestaltung des Halsteiles 3 und des Behälterkopfes 5 dem Ausführungsbeispiel von Fig. 3 und 4. Der Unterschied demgegenüber besteht jedoch darin, dass der Körper 9 des Dichtstoffes, ohne darin ausgebildete Vertiefung, im Durchmesser geringer ist als der zugeordnete Wandbereich 7 am Behälterkopf 5. In dem Bereich zwischen der Außenseite des Körpers 9 und dem äußeren Rand des Wandbereiches 7 ist der Körper 9 durch einen Kunststoffring 23 eingefasst. Die Einfassung des Körpers 9 vereinfacht die Handhabung beim Herstellungsprozess. Der Kunststoffring 23 kann mit dem Körper 9 verklebt oder verschweißt sein. Bei der Herstellung der stoffschlüssigen Verbindung des Körpers 9 mit dem Wandbereich 7 am Behälterkopf 5 kann der Kunststoffring 23 seinerseits eine Schweißverbindung am Behälterkopf 5 bilden.

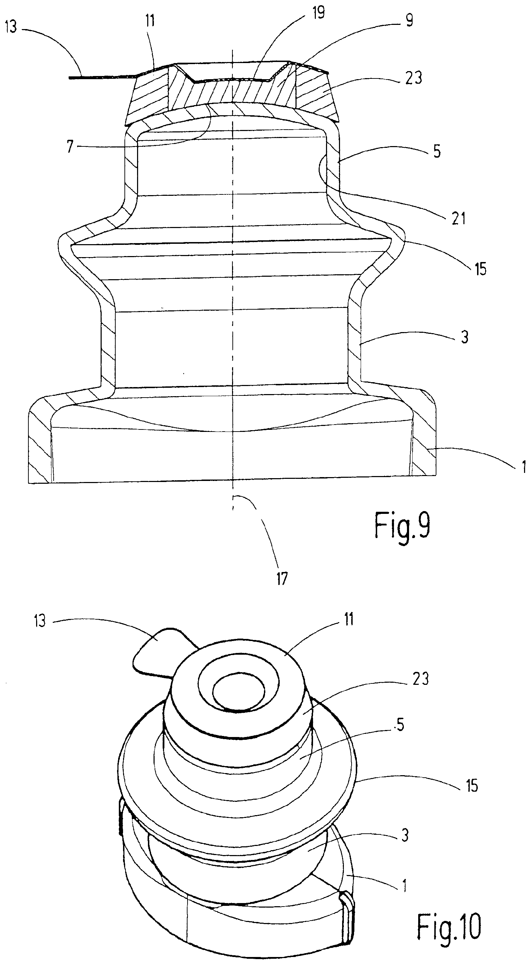

Die Fig. 9 und 10 zeigen ein fünftes Ausführungsbeispiel, bei dem die Gestaltung von Halsteil 3, Ausbauchung 15 und Behälterkopf 5 dem dritten Beispiel von Fig. 5 und 6 entspricht. Wie beim Beispiel von Fig. 7 und 8 ist jedoch der Körper 9 des Dichtstoffes von einem Kunststoffring 23 eingefasst, wie dies beim Beispiel von Fig. 7 und 8 der Fall ist. An der Oberseite des Körpers 9 ist eine Vertiefung 19 in ähnlicher Form wie die Vertiefung 19 von Fig. 3 ausgebildet, wobei sich bei Fig. 9 die Mulde bis in die Nähe des Außenrandes des Körpers 9 öffnet.

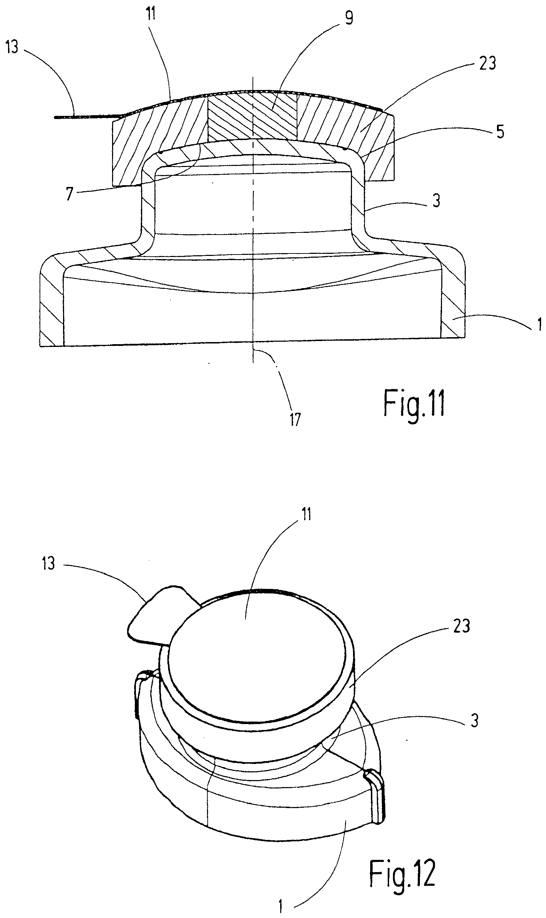

Die Fig. 11 und 12 zeigen ein sechstes Ausführungsbeispiel, bei dem die Gestaltung des Halsteiles 3 und des Behälterkopfes 5 dem Beispiel von Fig. 3 und 4 entspricht, wobei jedoch der Körper 9 des Dichtstoffes gegenüber dem zugeordneten Wandbereich 7 am Behälterkopf 5 im Durchmesser verringert ist. Dementsprechend ist der Innendurchmesser des als Einfassung vorgesehenen Kunststoffringes 23 entsprechend verringert, der Kunststoffring 23 ist jedoch in seinem Außendurchmesser derart vergrößert, dass er sich über den Rand des Wandbereiches 7 hinaus erstreckt und den Behälterkopf 5 übergreift. Dadurch ist eine zusätzliche seitliche Verankerung des Kunststoffringes 23 realisiert.

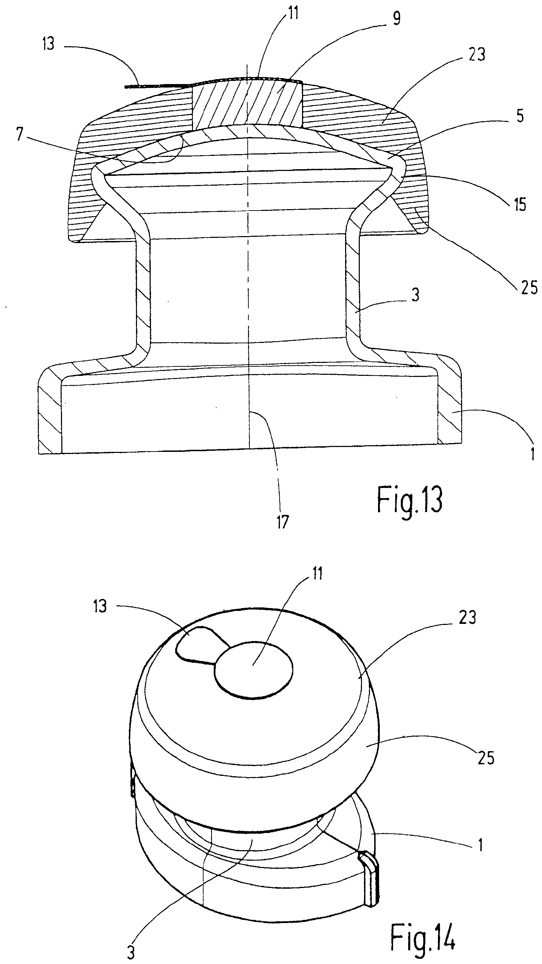

Bei dem in Fig. 13 und 14 gezeigten siebten Ausführungsbeispiel ist das Halsteil 3 wiederum bis zur Ausbauchung 15 verlängert, an die sich der Behälterkopf 5 unmittelbar anschließt. Wie beim Beispiel von Fig. 11 und 12 ist der Körper 9 des Dichtstoffes im Durchmesser gegenüber dem Durchmesser des Behälterkopfes 5 verringert. Der einfassende Kunststoffring 23 ist gegenüber Fig. 11 und 12 zur Bildung einer Art Kappe weiter vergrößert, die mit ihrem Außenrand 25 die Ausbauchung 15 am Ende des Halsteiles 3 derart übergreift, dass eine Schnapp- oder Rastverbindung für den Kunststoffring 23 gebildet ist.

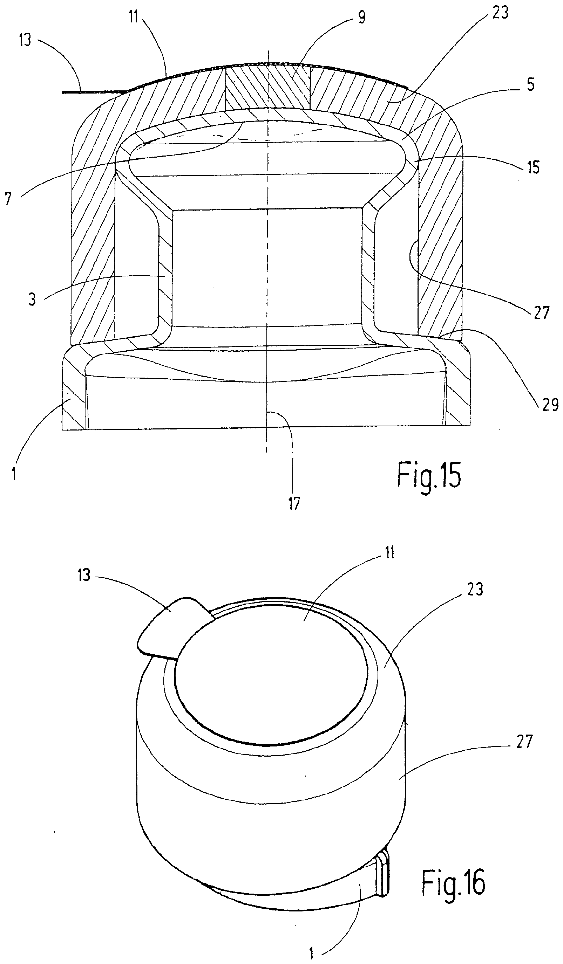

Bei dem achten Ausführungsbeispiel von Fig. 15 und 16 entsprechen die Formgebung des Halsteiles 3, der Ausbauchung 15 und des Behälterkopfes 5 dem Beispiel von Fig. 13 und 14. Jedoch ist der einfassende Kunststoffring 23 zur Bildung einer hutartigen Kappe durch einen Außenzylinder 27 derart verlängert, dass das Zylinderende an einer Schulter 29 anliegt, die am Übergang zwischen Behälterhauptteil 1 und Halsteil 3 gebildet ist. Das Zylinderende kann an der Schulter 29 befestigt sein, beispielsweise durch Verkleben oder Verschweißen.

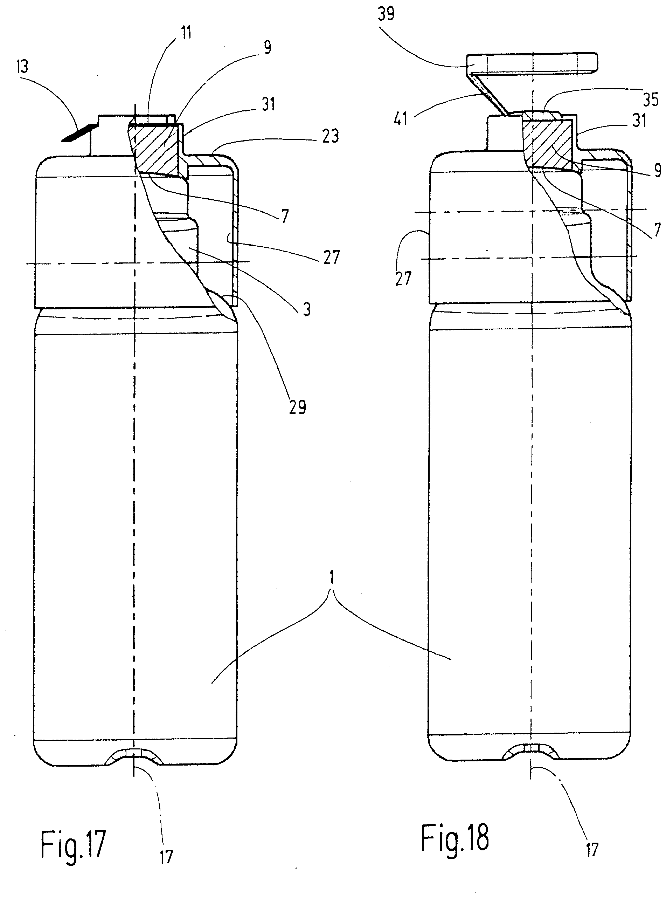

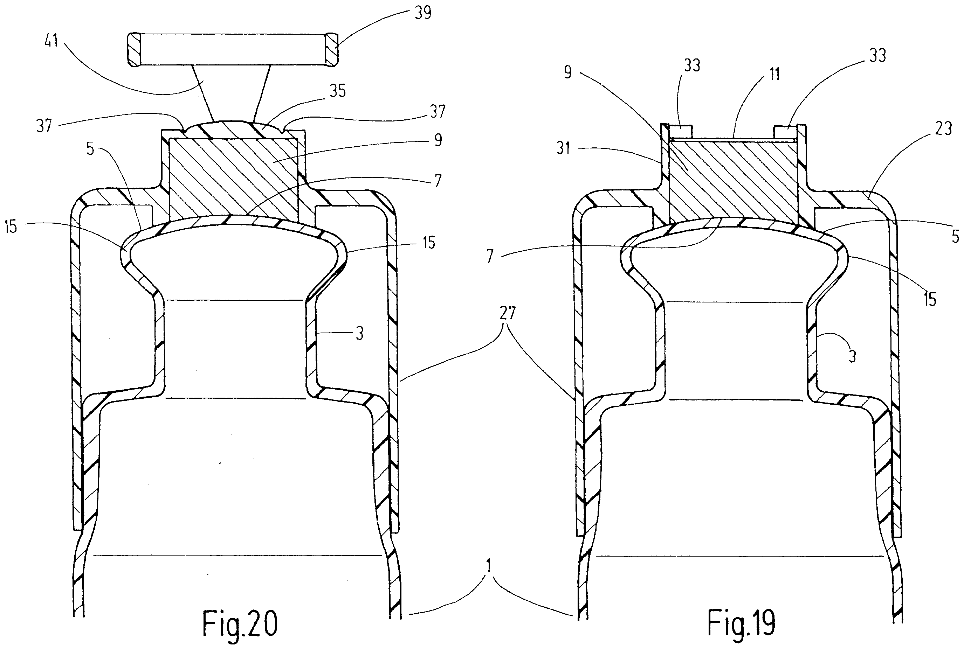

Die Fig. 17 und 19 zeigen ein neuntes Ausführungsbeispiel. Ähnlich wie beim vorherigen Beispiel von Fig. 15 und 16 ist der Kunststoffring 23 hutartig vergrößert, mit einem Außenzylinder 27, der sich bis zu einer Schulter 29 am Behälterhauptteil 1 erstreckt. Halsteil 3, Ausbauchung 15 und Behälterteil 5 entsprechen dem Beispiel von Fig. 15 und 16. Anders als dort gezeigt bildet der Kunststoffring 23 jedoch für den Körper 9 des Dichtstoffes eine Einfassung in Form eines Zylinders 31, der über den Körper 9 hinaus axial nach oben vorspringt und mit Ansätzen 33, siehe Fig. 19, die Schutzfolie 11 teilweise übergreift. Die überstehende Wand des Zylinders 31 mit den Ansätzen 33 kann eine Aufnahme für das Ansetzen eines an sich bekannten Entnahmeadapters bilden.

Das zehnte Ausführungsbeispiel von Fig. 18 und 20 unterscheidet sich vom Beispiel von Fig. 17 und 19 dadurch, dass anstelle der Schutzfolie 11 am oberen Ende des Zylinders 31 ein Schutzdeckel 35 einstückig angeformt ist, wobei Sollbruchstellen 37 (Fig. 20) gebildet sind, die ein Abreißen des Deckels 35 für einen Entnahmevorgang ermöglichen. Um das Abreißen zu erleichtern, ist am Deckel 35 ein als Handhabe dienender Ring 39 über eine Verbindungslasche 41 angeformt.

Um keimarme Oberflächen zu erzielen kann dem Dichtstoff des Körpers 9 bei seiner Herstellung ein antimikorbielles Additiv zugesetzt werden, beispielsweise With Stand^{®} von der Firma Poly One oder HP 7A 4000 AM von der Firma Gabriel Chemie. Dies hat den Vorteil, dass die Einstichstelle am Körper 9 vor dem Durchstechen mittels Domes oder Kanüle nicht mehr desinfiziert werden muss.

## Patentansprüche

1. Dichtungsanordnung, bestehend aus mindestens einem Behälter und einem auf einem Wandbereich (7) einer der Umgebung zugewandten Außenseite des Behälters angeordneten und mit diesem stoffschlüssig verbundenen Dichtstoff, wobei das Innere des Behälters der Aufnahme eines Füllguts, insbesondere in Form eines steril abgefüllten Fluids, dient, das mittels einer Entnahmeeinrichtung, wie einer Kanüle oder Spritzennadel, aus dem Behälter (1) entnehmbar ist, die hierfür den Dichtstoff durchdringt, wobei der Behälter aus Kunststoff in einem Blasformverfahren hergestellt, befüllt und steril verschlossen ist und der Wandbereich (7) als Einstichbereich vorgesehen und zur Entnahme des Füllguts mittels einer Kanüle oder eines Doms durchstechbar ist, wobei der Dichtstoff zur Abdichtung einer bei einem Entnahmevorgang an dem Wandbereich (7) gebildeten Einstichstelle dient, **dadurch gekennzeichnet, dass** der Dichtstoff vom Behälter gesondert hergestellt und in Form eines block- oder scheibenartigen Körpers (9) gebildet ist und über eine Schweiß-und/oder Klebstoffverbindung mit dem als Einstichstelle vorgesehenen Wandbereich (7) des Behälters fest verbunden ist.

2. Dichtungsanordnung nach Anspruch 1, **dadurch gekennzeichnet, dass** der block- oder scheibenartige Körper (9) ohne Schweißzusatz und bevorzugt klebstofffrei mit dem Wandbereich (7) des Behälters fest verschweißt ist.

3. Dichtungsanordnung nach Anspruch 1 oder 2, **dadurch gekennzeichnet, dass** der block- oder scheibenartige Körper (9) abstandsfrei und mit seiner gesamten, dem Behälter (1) zugewandten Kontaktfläche an dem Wandbereich (7) anliegt.

4. Dichtungsanordnung nach einem der vorhergehenden Ansprüche, **dadurch gekennzeichnet, dass** als Dichtstoff verkleb- oder verschweißbare Elastomere oder Kunststoffe zum Einsatz kommen und dass vorzugsweise als Dichtstoff ein thermoplastisches Elastomer (TPE) eingesetzt ist.

5. Dichtungsanordnung nach einem der vorhergehenden Ansprüche, **dadurch gekennzeichnet, dass** der Behälter einen mit einem Behälterhauptteil (1) über ein Halsteil (3) verbundenen Behälterkopf (5) mit dem als Einstichbereich für einen Entnahmevorgang durchstechbaren Wandbereich (7) nebst dem block- oder scheibenartigen Körper (9) aufweist.

6. Dichtungsanordnung nach einem der vorhergehenden Ansprüche, **dadurch gekennzeichnet, dass** an der Außenseite der Dichtungsanordnung eine am block- oder scheibenartigen Körper (9) ablösbar anliegende Schutzfolie (11) vorgesehen ist.

7. Dichtungsanordnung nach Anspruch 5, **dadurch gekennzeichnet, dass** der mit dem block- oder scheibenartigen Körper (9) verbundene Wandbereich (7) des Behälterkopfes (5) eine vom Behälterinneren nach außen gerichtete Wölbung aufweist und dass die Außenseite des block- oder scheibenartigen Körpers (9) eine gleichartige Wölbung aufweist.

8. Dichtungsanordnung nach einem der Ansprüche 1 bis 7, **dadurch gekennzeichnet, dass** die Außenseite des block- oder scheibenartigen Körpers (9) zumindest eine Vertiefung (19) aufweist.

9. Dichtungsanordnung nach Anspruch 8, **dadurch gekennzeichnet, dass** die Vertiefung (19) die Form eines Ringraumes besitzt, der zu einem zentralen, unvertieften Bereich konzentrisch verläuft.

10. Dichtungsanordnung nach einem der Ansprüche 5 oder 6 bis 9, sofern diese auf Anspruch 5 bezogen sind, **dadurch gekennzeichnet, dass** ein den block- oder scheibenartigen Körper (9) seitlich einfassender Kunststoffring (23) vorgesehen ist, der mit dem Behälterkopf (5) und/ oder dem Behälterhauptteil (1) verbunden ist.

11. Dichtungsanordnung nach Anspruch 10, **dadurch gekennzeichnet, dass** der Kunststoffring (23) einen am Behälterkopf (5) radial vorspringenden Randbereich (15) hintergreift.

12. Dichtungsanordnung nach Anspruch 10 oder 11, **dadurch gekennzeichnet, dass** der Behälter (1) am Übergang zwischen Behälterhauptteil (1) und Behälterkopf (5) eine Schulter (29) bildet und dass der Kunststoffring (23) den Behälterkopf (5) kappenartig übergreift und mit der Schulter (29) verbunden ist.

13. Dichtungsanordnung nach einem der Ansprüche 10 bis 12, **dadurch gekennzeichnet, dass** der kappenartige Kunststoffring (23) für den Körper (9) eine Einfassung in Form eines Zylinders (27), der über den Körper (9) hinaus axial vorspringt, bildet.

14. Verfahren zum Herstellen einer Dichtungsanordnung gemäß einem der Ansprüche 1 bis 13, bei dem eine unlösbare stoffschlüssige Verbindung zwischen dem als Einstichbereich für einen Entnahmevorgang vorgesehenen Wandbereich (7) der Behälterwand und dem Dichtstoff in Form des block- oder scheibenartigen Körpers (9) aus einem verschweißbaren Kunststoff, vorzugsweise einem thermoplastischen Elastomer (TPE), durch einen Fügevorgang gebildet wird, bei dem die Kontaktfläche an zumindest einem der besagten stoffschlüssig zu verbindenden Fügeelemente auf zumindest die Sterilisiertemperatur erhitzt wird, bevor die Fügeelemente zur Verschweißung aneinander angedrückt werden.

15. Verfahren nach Anspruch 14, **dadurch gekennzeichnet, dass** ein Dichtstoff benutzt wird, der ein antimikrobielles Additiv enthält.

## Claims

1. A seal assembly comprising at least one container and a sealing material disposed on a wall section (7) of an outside of the container facing the surroundings and connected by a materially integrated bond to the latter, the inside of the container serving to accommodate a product, in particular in the form of a fluid that is bottled in a sterile manner and which can be removed from the container (1) by means of a removal device such as a cannula or syringe needle, for which purpose said removal device penetrates the sealing material, the container being produced from plastic by a blow moulding process, being filled and sealed in a sterile manner, and the wall section (7) being provided as a puncturing region and being able to be pierced by means of a cannula or a mandrel in order to remove the product, the sealing material serving to seal a puncture site formed on the wall section during a removal procedure, **characterised in that** the sealing material is produced separately from the container and is made in the form of a block- or disc-shaped body (9) and is connected securely to the wall section (7) of the container provided as the puncture site by means of a welded and/or adhesively bonded connection.

2. The seal assembly according to Claim 1, **characterised in that** the block- or disc-shaped body (9) is securely welded to the wall section (7) of the container without any filler material and preferably free of adhesives.

3. The seal assembly according to Claim 1 or 2, **characterised in that** the block- or disc-shaped body (9) rests against the wall section without any gap and with its entire contact surface that faces the container (1).

4. The seal assembly according to any of the preceding claims, **characterised in that** elastomers or plastics that can be bonded or welded are used as a sealing material, and **in that** a thermoplastic elastomer (TPE) is preferably used as a sealing material.

5. The seal assembly according to any of the preceding claims, **characterised in that** the container has a container head (5) connected to a main part of the container (1) by means of a neck part (3) with the wall section (7) that can be pierced as a puncture region for a removal procedure in addition to the block- or disc-shaped body (9).

6. The seal assembly according to any of the preceding claims, **characterised in that** a protective film (11) resting detachably on the block- or disc-shaped body (9) is provided on the outside of the seal assembly.

7. The seal assembly according to Claim 5, **characterised in that** the wall section (7) of the container head (5) connected to the block- or disc-shaped body (9) has a curvature that extends from the interior of the container outwards, and that the outside of the block- or disc-shaped body (9) has a similar curvature.

8. The seal assembly according to any of Claims 1 to 7, **characterised in that** the outside of the block- or disc-shaped body (9) has at least one recess (19).

9. The seal assembly according to Claim 8, **characterised in that** the recess (19) is in the form of an annular space which runs concentrically to a central, non-recessed region.

10. The seal assembly according to any of Claims 5 or 6 to 9, in so far as these latter relate back to Claim 5, **characterised in that** a plastic ring (23) that laterally encloses the block- or disc-shaped body (9) is provided, which ring is connected to the container head (5) and/or to the main part of the container (1).

11. The seal assembly according to Claim 10, **characterised in that** the plastic ring (23) engages behind a radially projecting edge region (15) on the container head (5).

12. The seal assembly according to Claim 10 or 11, **characterised in that** the container (1) forms a shoulder (29) at the transition between the main part of the container (1) and the container head (5), and that the plastic ring (23) overlaps the container head (5) in the manner of a cap and is connected to the shoulder (29).

13. The seal assembly according to any of Claims 10 to 12, **characterised in that** the cap-like plastic ring (23) forms an enclosure for the body (9) in the form of a cylinder (27) which projects axially outward beyond the body (9).

14. A method of producing a seal assembly according to any of Claims 1 to 13, wherein a non-detachable connection with a materially integrated bond between the wall section (7) of the container wall provided as a puncture region for a removal procedure and the sealing material in the form of the block- or disc-shaped body (9) made of a weldable plastic, preferably a thermoplastic elastomer (TPE), is formed by a joining process in which the contact surface on at least one of said joining elements to be connected by a materially integrated bond is heated at least to the sterilisation temperature before the joining elements are pressed against one another to form a welded joint.

15. The method according to Claim 14, **characterised in that** a sealing material is used which contains an antimicrobial additive.

## Revendications

1. Agencement d'étanchéité constitué d'au moins un récipient et d'une matière d'étanchéité disposée sur une partie (7) de paroi d'une face extérieure du récipient tournée vers l'atmosphère ambiante et reliée à celui-ci à coopération de matière,
dans lequel l'intérieur du récipient sert à la réception d'un produit de remplissage, notamment sous la forme d'un fluide mis de manière stérile, qui peut être prélevé du récipient (1) au moyen d'un dispositif de prélèvement comme une canule ou une aiguille d'injection, qui traverse à cet effet la matière d'étanchéité, le récipient étant fabriqué par un procédé de moulage par soufflage, rempli et fermé de manière stérile et la partie (7) de paroi étant prévue comme partie à piquer et pouvant, pour le prélèvement du produit de remplissage, être transpercée au moyen d'une canule ou d'une broche, la matière d'étanchéité servant à rendre étanche un point de piqûre formé lors de l'opération de prélèvement sur la partie (7) de paroi,
**caractérisé en ce que** la matière d'étanchéité est fabriquée séparément du récipient et est sous la forme d'une pièce (9) de type en bloc ou en disque et est reliée, par soudage et/ou collage, à la partie (7) de paroi du récipient prévue comme point de piqûre.

2. Agencement d'étanchéité suivant la revendication 1, **caractérisé en ce que** la pièce (9) de type en bloc ou en disque est soudée fixement sans additif de soudage, et de préférence sans colle, à la partie (7) de paroi du récipient.

3. Agencement d'étanchéité suivant la revendication 1 ou 2, **caractérisé en ce que** la pièce (9) de type en bloc ou en disque s'applique, sans distance et par toute sa surface de contact tournée vers le récipient (1), à la partie (7) de paroi.

4. Agencement d'étanchéité suivant l'une des revendications précédentes, **caractérisé en ce qu'**il est utilisé, comme matière d'étanchéité, des élastomères ou des matières plastiques pouvant se coller ou se souder et **en ce qu'**il est utilisé, de préférence, un élastomère thermoplastique comme matière d'étanchéité.

5. Agencement d'étanchéité suivant l'une des revendications précédentes, **caractérisé en ce que** le récipient a, du côté de la pièce (9) de type en bloc ou en disque, une tête (5) reliée à une partie (1) principale par un col (3) et ayant la partie (7) de paroi pouvant être transpercée comme partie de piqûre pour une opération de prélèvement.

6. Agencement d'étanchéité suivant l'une des revendications précédentes, **caractérisé en ce qu'**il est prévu, du côté extérieur de l'agencement d'étanchéité, une feuille (11) de protection s'appliquant de manière détachable à la pièce (9) de type en bloc ou en disque.

7. Agencement d'étanchéité suivant la revendication 5, **caractérisé en ce que** la partie (7) de paroi, reliée à la pièce (9) de type en bloc ou en disque, de la tête (5) du récipient a une courbure dirigée de l'intérieur du récipient vers l'extérieur et **en ce que** la face extérieure de la pièce (9) du type en bloc ou en disque a une courbure de même type.

8. Agencement d'étanchéité suivant l'une des revendications 1 à 7, **caractérisé en ce que** la face extérieure de la pièce (9) du type en bloc ou en disque a au moins une cavité (19).

9. Agencement d'étanchéité suivant la revendication 8, **caractérisé en ce que** la cavité (19) a la forme d'un espace annulaire, qui s'étend concentriquement à une partie centrale non renfoncée.

10. Agencement d'étanchéité suivant l'une des revendications 5 ou 6 à 9, dans la mesure où elles se rapportent à la revendication 5, **caractérisé en ce qu'**il est prévu une bague (23) en matière plastique enchâssant latéralement la pièce (9) de type en bloc ou en disque et reliée à la tête (5) du récipient et/ou à la partie (1) principale du récipient.

11. Agencement d'étanchéité suivant la revendication 10, **caractérisé en ce que** la bague (23) en matière plastique s'accroche à une partie (15) de bord faisant saille radialement de la tête (5) du récipient.

12. Agencement d'étanchéité suivant la revendication 10 ou 11, **caractérisé en ce que** le récipient (1) forme, à la transition entre la partie (1) principale du récipient et la tête (5) du récipient, un épaulement (29) et **en ce que** la bague (23) en matière plastique recouvre, à la manière d'une coiffe, la tête (5) du récipient et est reliée à l'épaulement (29).

13. Agencement d'étanchéité suivant l'une des revendications 10 à 12, **caractérisé en ce que** la bague (23) en matière plastique de type coiffe forme, pour la pièce (9), une bordure sous la forme d'un cylindre (27), qui dépasse axialement de la pièce (9).

14. Procédé de fabrication d'un agencement d'étanchéité suivant l'une des revendications 1 à 13, dans lequel on forme une liaison à coopération de matière indissoluble, entre la partie (7) de paroi, prévue sous forme de partie à piquer pour une opération de prélèvement, de la paroi du récipient et la matière d'étanchéité sous la forme de la pièce (9) de type en bloc ou en disque, en une matière plastique soudable, de préférence en un élastomère thermoplastique (TPE), par une opération de jonction, dans laquelle on chauffe la surface de contact, sur au moins l'un des éléments de la jonction à relier à coopération de matière, jusqu'à au moins la température de stérilisation avant de presser les éléments de jonction l'un contre l'autre pour la soudure.

15. Procédé suivant la revendication 14, **caractérisé en ce qu'**on utilise une matière d'étanchéité, qui contient un additif antimicrobien.
